# EUROPEAN PATENT APPLICATION

(11) **EP 4 737 221 A1**
(43) Date of publication of application: **06.05.2026**
(21) Application number: 25205987.8
(22) Date of filing: 01.10.2025
(51) Int. Cl.: B60R 19/34, B62D 21/15, B62D 25/08

(54) **VEHICLE STRUCTURE**

(30) Priority: 29.10.2024 JP 2024190077
(71) Applicant: TOYOTA JIDOSHA KABUSHIKI KAISHA, Toyota-shi, Aichi-ken 471-8571 (JP)
(72) Inventor: MURASHIGE, Norihiro, TOYOTA-SHI, AICHI-KEN, 471-8571 (JP)
(74) Representative: Cabinet Beau de Loménie

(57) **Abstract**

A vehicle structure having: a framework member (14) extending in a vehicle front-rear direction at a vehicle width direction side section; a crash box (22) disposed further to an outer side, in the vehicle front-rear direction, than the framework member (14), and extending in the vehicle front-rear direction, the crash box (22) being a single body with or integrated to the framework member (14); a first wall (106, 108) provided inside a cross-section of the framework member (14) at least at an end portion, in the vehicle front-rear direction, on a crash box side, the first wall (106, 108) having a plate thickness aligned with a vehicle height direction and extending in the vehicle front-rear direction; and a second wall (126) provided inside a cross-section of the crash box (22) at a height overlapping with the first wall (106, 108) when viewed along the vehicle front-rear direction, the second wall (126) having a plate thickness aligned with the vehicle height direction and extending in the vehicle front-rear direction.

## Description

### Background

### Technical Field

The present disclosure relates to a vehicle structure.

### Related Art

Japanese Patent Application Laid-Open (JP-A) No. 2006-062561 discloses technology related to a shock absorption structure for a vehicle equipped with a pair of crash boxes at two end portions of a bumper reinforcement that extends along a width direction of a vehicle, with the crash boxes respectively interposed between the bumper reinforcement and a pair of side members that extend along a front-rear direction of the vehicle.

In technology related thereto, a crash box is configured by a hollow structure opening in a vehicle height direction, with an upper or lower opening end closed off by a load regulation plate.

There are also configurations in which weld separation is suppressed by performing fastening a bumper reinforcement, crash boxes, and side members together using bolt fastening, and by absorbing crash energy during a vehicle collision with the crash boxes.

### Summary

However, when a crash load has been input to a vehicle along the vehicle front-rear direction, although crash load is transmitted between the side members and the crash boxes, there is room for improvement from the perspective of the efficiency when crash load is transmitted (so-called load transmission efficiency).

In consideration of the above circumstances, the present disclosure provides a vehicle structure capable of raising the load transmission efficiency when crash load has been input along the vehicle front-rear direction.

A vehicle structure according to a first aspect includes: a framework member extending in a vehicle front-rear direction at a side section, in a vehicle width direction, of a vehicle; a crash box disposed further to an outer side, in the vehicle front-rear direction, than the framework member, and extending in the vehicle front-rear direction, the crash box being a single body with the framework member or being provided integrated to the framework member; a first wall provided inside a cross-section of the framework member at least at an end portion positioned, in the vehicle front-rear direction, on a crash box side of the framework member, the first wall having a plate thickness direction aligned with a vehicle height direction and extending in the vehicle front-rear direction when viewed along the vehicle width direction; and a second wall provided inside a cross-section of the crash box at a height overlapping with the first wall when viewed along the vehicle front-rear direction, the second wall having a plate thickness direction aligned with the vehicle height direction and extending in the vehicle front-rear direction when viewed along the vehicle width direction.

The vehicle structure according to the first aspect includes the framework member and the crash box. The framework member extends in the vehicle front-rear direction at the side section, in the vehicle width direction, of the vehicle. The crash box is disposed further to the outer side in the vehicle front-rear direction than the framework member and the crash box is a single body with the framework member or is provided integrated to the framework member, and the crash body extends in the vehicle front-rear direction.

The first wall is provided at the framework member and the second wall is provided at the crash box. The first wall is provided inside the cross-section of the framework member at least at the end portion, in the vehicle front-rear direction, on the crash box side of the framework member, and the first wall has a plate thickness direction aligned with the vehicle height direction and extends in the vehicle front-rear direction when viewed from the vehicle width direction.

The second wall is provided inside the cross-section of the crash box at a height overlapping with the first wall provided at the framework member when viewed along the vehicle front-rear direction, and the second wall has a plate thickness direction aligned with the vehicle height direction and extends in the vehicle front-rear direction when viewed from the vehicle width direction.

In the present aspect the first wall is provided at the framework member with its plate thickness direction aligned with the vehicle height direction and extending in the vehicle front-rear direction, and the second wall is provided at the crash box with its plate thickness direction aligned with the vehicle height direction and extending in the vehicle front-rear direction. The first wall and the second wall are provided at heights overlapping with each other when viewed along the vehicle front-rear direction.

When crash load is input to a vehicle along the vehicle front-rear direction, the crash load is effectively transmitted from the crash box to the framework member along the vehicle front-rear direction. An energy absorption effect (hereinafter simply referred to as "EA effect") by the crash box can be raised.

Moreover, the first wall and the second wall that effectively transmit crash load between the framework member and the crash box are respectively provided inside the cross-section of the framework member and inside the cross-section of the crash box. Load transmission paths for transmitting crash load are secured inside the cross-sections of the framework member and the crash box, enabling the degrees of freedom for design to be raised for the exterior profiles of the framework member and the crash box.

Note that reference here to "is a single body with, or is provided integrated to" means cases in which the crash box is molded as a single body to the framework member, and also includes cases in which a crash box molded as a separate member to the framework member is connected to and integrated to the framework member by welding, fastenings, or the like. Moreover, "overlapping with each other when viewed along the vehicle front-rear direction" does not necessarily mean completely overlapping when viewed along the vehicle front-rear direction, and also includes configurations in which at least respective parts thereof overlap to each other.

A vehicle structure according to a second aspect is the vehicle structure according to the first aspect, in which the crash box includes an upper wall that configures an upper end portion in the vehicle height direction, and a lower wall configuring a lower end portion that opposes the upper wall in the vehicle height direction, and plural first walls are provided, at least part of the plural first walls are provided at a height overlapping with at least one of the upper wall or the lower wall of the crash box when viewed along the vehicle front-rear direction.

In the vehicle structure according to the second aspect, the crash box includes the upper wall and the lower wall that oppose each other. There are plural first walls provided, at least a part of the plural first walls are provided at a height overlapping with at least one of the upper wall or the lower wall of the crash box when viewed along the vehicle front-rear direction. The number of load transmission paths between the crash box and the framework member can be increased by providing the plural first walls inside the cross-sections of the framework member, enabling load distribution to be achieved.

A vehicle structure according to a third aspect is the vehicle structure according to the first aspect or the second aspect, further including: a bumper reinforcement extending along the vehicle width direction further to an outer side, in the vehicle front-rear direction, than the crash box; and a third wall provided inside a cross-section of the bumper reinforcement at a height overlapping with the second wall when viewed along the vehicle front-rear direction, the third wall having a plate thickness direction aligned with the vehicle height direction and extending in the vehicle front-rear direction when viewed along the vehicle width direction.

The vehicle structure according to the third aspect further includes the bumper reinforcement that extends in the vehicle width direction further at the outer side, in the vehicle front-rear direction, than the crash box, and the third wall is provided at the bumper reinforcement. The third wall is provided inside the cross-section of the bumper reinforcement, and is provided at a height overlapping with the second wall provided inside the cross-section of the crash box when viewed along the vehicle front-rear direction. The third wall has a plate thickness direction aligned with the vehicle height direction and extends in the vehicle front-rear direction when viewed along the vehicle width direction.

The third wall is provided at the bumper reinforcement at a height overlapping with the second wall of the crash box when viewed along the vehicle front-rear direction, with this enabling crash load to be effectively transmitted from the bumper reinforcement to the crash box along the vehicle front-rear direction when crash load is input in a vehicle along the vehicle front-rear direction. Namely in the present aspect, the load transmission efficiency from the bumper reinforcement to the crash box is raised, enabling the EA effect by the crash box to be raised.

A vehicle structure according to a fourth aspect is the vehicle structure according to any one aspect of the first aspect to the third aspect, in which the first wall is integrally molded to the framework member, the second wall is integrally molded to the crash box, and the third wall is integrally molded to the bumper reinforcement.

In the vehicle structure according to the fourth aspect, the first wall, the second wall, and the third wall are respectively integrally molded to the framework member, the crash box, and the bumper reinforcement. This thereby enables the rigidity of the first wall, the second wall, and the third wall to be raised compared, for example, to cases in which the first wall, the second wall, and the third wall are respectively formed as separate members from the framework member, the crash box, and the bumper reinforcement. The present aspect accordingly enables the load transmission efficiency to the bumper reinforcement, the crash boxes, and the framework member to be further raised.

A vehicle structure according to a fifth aspect is the vehicle structure according to any one aspect of the first aspect to the fourth aspect, in which the framework member is disposed at a vehicle rear section, and is configured by a rear-side member that is curved so as to be convex toward a vehicle upper side when viewed along the vehicle width direction.

In the vehicle structure according to the fifth aspect, the framework member is configured by the rear-side member disposed at the vehicle rear section. The rear-side member is curved so as to be convex toward a vehicle upper side when viewed along the vehicle width direction. Effective load transmission from the crash box to the rear-side member substantially along a horizontal direction by the first wall provided at the rear-side member and the second wall provided at the crash box, even for the rear-side member that is curved in the vehicle height direction.

A vehicle structure according to a sixth aspect is the vehicle structure according to any one aspect of the first aspect to the fifth aspect, in which the framework member is formed with an open cross-section profile, and the crash box is formed with a closed cross-section profile.

In the vehicle structure according to a sixth aspect the framework member is formed with an open cross-section profile. There might accordingly be a concern with such a framework member regarding a drop in load transmission efficiency to the crash box compared to a framework member formed with a closed cross-section profile. However, in the first aspect, the load transmission efficiency is able to be raised between the first wall provided inside the cross-section of the framework member and the second wall provided at the crash box that is formed with a closed cross-section profile, and the present aspect is able to raise the load transmission efficiency effectively irrespective of the framework member having an open cross-section profile.

A vehicle structure according to a seventh aspect is the vehicle structure according to any one aspect of the first aspect to the sixth aspect, in which the first wall extends in the vehicle front-rear direction so as to connect together a rear section, in the vehicle front-rear direction, of the framework member and a lower edge portion of a central section, in the vehicle front-rear direction, of the framework member.

In the vehicle structure according to the seventh aspect, at the framework member that is formed curved so as to be convex toward a vehicle upper side when viewed along the vehicle width direction, the first wall extends in the vehicle front-rear direction so as to connect the rear section of the framework member to the lower edge portion of the central section of the framework member. The present aspect is accordingly able to take crash load transmitted from the crash box through the first wall of the framework member, and effectively transmit the crash load along the profile of the framework member.

A vehicle structure according to an eighth aspect is the vehicle structure according to any one aspect of the first aspect to the seventh aspect, in which the crash box further includes a pair of first side walls that are disposed opposing each other and connect the upper wall and the lower wall together to form an angular tube shape, a connection section is provided at the framework member for connecting to the crash box. The connection section includes a coupling wall coupled to the upper wall of the crash box, and a pair of second side walls that are disposed respectively depending from the coupling wall toward the vehicle lower side and opposing each other, with the pair of second side walls respectively coupled to the pair of first side walls of the crash box.

In the vehicle structure according to the eighth aspect, the crash box further includes the pair of first side walls that are disposed opposing each other and connect the upper wall and the lower wall together to form an angular tube shape. Moreover, the connection section for connecting to the crash box is provided at the framework member. The connection section includes the coupling wall and the pair of second side walls, with the coupling wall coupled to the upper wall of the crash box, and the pair of second side walls disposed respectively depending from the coupling wall toward the vehicle lower side and opposing each other, and respectively coupled to the pair of first side walls provided at the crash box.

The connection section is provided at the framework member for coupling of the crash box such that the upper wall and the pair of first side wall are covered. Thus in the present aspect, when crash load is input to a vehicle along the vehicle front-rear direction, displacement at the crash box toward the vehicle upper side and the vehicle width direction outer side with respect to the framework member can be decreased through the connection section. The present aspect is accordingly able to more reliably transmit crash load from the crash box to the framework member.

As described above, the vehicle structure according to the present disclosure is able to raise load transmission efficiency when crash load is input along a vehicle front-rear direction.

### Brief Description of the Drawings

Exemplary embodiments of the present disclosure will be described in detail based on the following figures, wherein:
Fig. 1 is a perspective view of a vehicle rear section side of a vehicle body structure including a rear-side member applied with a vehicle structure according to an exemplary embodiment, as viewed diagonally from the left and rear of a vehicle;
Fig. 2 is a longitudinal cross-section sectioned along line A-A in Fig. 1;
Fig. 3 is a vertical cross-section illustrating a rear end section, a crash box, and a bumper reinforcement of a rear-side member applied with a vehicle structure according to the present exemplary embodiment, as viewed from a vehicle width direction outer side;
Fig. 4 is a vertical cross-section of a crash box and a bumper reinforcement illustrating a Modified Example 1 of a vehicle structure according to the present exemplary embodiment, as viewed from a vehicle width direction outer side;
Fig. 5 is a vertical cross-section of a crash box and a bumper reinforcement illustrating a Modified Example 2 of a vehicle structure according to the present exemplary embodiment, as viewed from a vehicle width direction outer side; and
Fig. 6 is a vertical cross-section corresponding to Fig. 3 and illustrating a Modified Example 3 of a vehicle structure according to the present exemplary embodiment.

### Detailed Description

Description follows regarding a vehicle structure according to a first exemplary embodiment of the present disclosure. Note that, as appropriate in the drawings, arrow FR indicates a vehicle front-rear direction front side and an arrow UP indicates a vehicle height direction upper side. Moreover, unless explicitly stated otherwise, references in the description simply to front and rear, left and right, and up and down directions indicate front and rear in the vehicle front-rear direction, left and right in the vehicle left-right direction (vehicle width direction), and up and down in the vehicle height direction.

### Vehicle Structure Configuration

First, description follows regarding a configuration of a vehicle structure according to an exemplary embodiment.

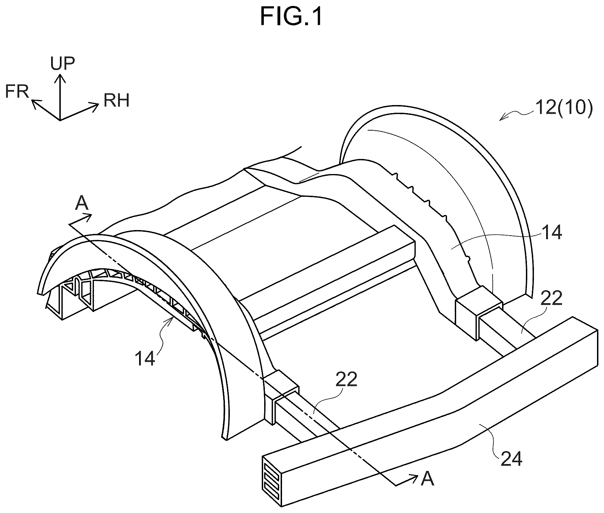

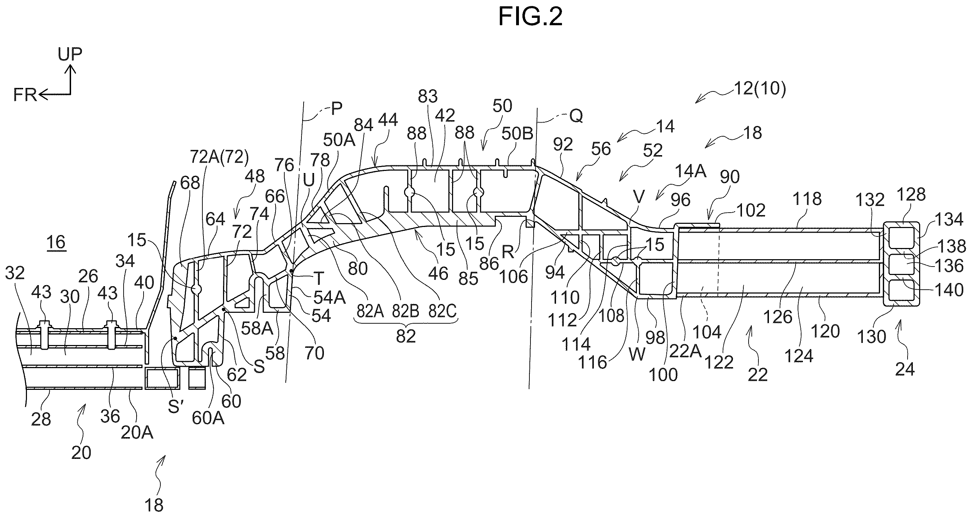

Fig. 1 is a perspective view of a rear section 12 side of a vehicle 10 applied with a vehicle structure according to an exemplary embodiment, as viewed diagonally from a left and rear side, and Fig. 2 is a longitudinal cross-section sectioned along line A-A in Fig. 1, as viewed from a width direction outer side.

Rear-side members 14 (framework members) illustrated at a central region of Fig. 2 are respectively disposed at a rear side of a left-right pair of rockers 20 that extend in a front-rear direction at side sections 18, in a width direction, of a vehicle cabin interior 16. The rear-side members 14 extend in the front-rear direction and a crash box 22 is disposed at a rear side of each of the rear-side members 14. The crash boxes 22 each extend in the front-rear direction, and a bumper reinforcement 24 is disposed at a rear side of each of the crash boxes 22. Note that the bumper reinforcement 24 extends along the width direction.

Description follows regarding each of these members.

### Rocker

A rocker 20 illustrated in Fig. 2 has, for example, a closed cross-section profile formed in an angular tube shape in cross-section profile sectioned along the height direction and the width direction, and extends in the front-rear direction as described above. The rocker 20 is configured including mutually opposing walls of an upper wall 26 and a lower wall 28, and a pair of side walls 30 respectively provided at the width direction left and right.

An upper lateral wall 34 and a lower lateral wall 36 are respectively provided between the upper wall 26 and the lower wall 28 so as to partition the inside of a hollow section 32 formed by the upper wall 26, the lower wall 28, and the pair of side walls 30 in the height direction. The upper lateral wall 34 and the lower lateral wall 36 each respectively extend in the front-rear direction with their plate thickness directions aligned with the height direction in vehicle side view (width direction view). A connection section 40 provided at the side of the rear-side member 14, described later, is connected to a rear end portion 20A of the rocker 20 by bolts 43, welding, or the like.

### Rear-Side Member

The rear-side member 14 illustrated in Fig. 2 is, for example in the present exemplary embodiment, molded by aluminum die casting, extends in the front-rear direction, and is formed curved so as to have a convex profile toward the upper side in vehicle side view. Moreover, in the present exemplary embodiment, a cross-section profile of the rear-side member 14 when sectioned along the height direction and the width direction is an open cross-section profile opening to the width direction outer side.

Namely, the rear-side member 14 is molded by a mold (not illustrated in the drawings) that opens at a side, in the width direction, of the rear-side member 14. This means that the rear-side member 14 is provided with plural bosses 15 for contact from push pins to release the molded rear-side member 14 from the mold. However, bosses 15 are not limited to those used for mold release, and may be provided for fastening of other components.

The rear-side member 14 is configured including an upright wall 42 that extends along the height direction and the front-rear direction. An upper wall 44 and a lower wall 46 respectively extend from an upper end and a lower end of the upright wall 42 toward the width direction outer side. Namely, the upper wall 44 and the lower wall 46 extend in the front-rear direction and the width direction.

Description follows regarding the rear-side member 14 and, for ease of explanation, the rear-side member 14 is divided in the front-rear direction into a front section 48, a central section 50, and a rear section 52.

The front section 48 of the rear-side member 14 is, for example, a section thereof from a lower end of the rear-side member 14 including a front wall 68 illustrated in Fig. 2 as far as a pendant wall 54, described later, that depends to the lower side from a lower end of the rear-side member 14. A plane along the height direction and the width direction passing through a rear face 54A of the pendant wall 54 is a boundary P of the front section 48 to the central section 50 of the rear-side member 14.

An inclined portion 56, described later, formed inclined toward the lower side on progression toward the rear side is provided at the rear section 52 of the rear-side member 14. A plane along the height direction and the width direction passing through an origin point R indicating a front end and a lower end of the inclined portion 56 is a boundary Q of the rear section 52 to the central section 50 of the rear-side member 14. Note that a non-illustrated rear suspension member is connectable to the front section 48 and the rear section 52 of the rear-side member 14.

### Rear-Side Member Front Section

An attachment seat 58 for attachment of a front portion of the rear suspension member, and an attachment seat 60 for attachment of a non-illustrated battery cover, are respectively provided at a lower wall 46 side of the front section 48 of the rear-side member 14. The attachment seat 58 is configured including the pendant wall 54, and fastening portions 58A, 60A for insertion and fastening of fastening members (omitted in the drawings) are respectively provided at the attachment seats 58, 60.

The attachment seats 58, 60 are formed substantially along the horizontal direction, and a height difference is provided between the attachment seat 58 and the attachment seat 60. A pendant wall 62 is accordingly provided to connect between the attachment seat 58 and the attachment seat 60. Namely, at the front section 48 of the rear-side member 14, the lower wall 46 is configured including the attachment seat 60, the pendant wall 62, the attachment seat 58, and the pendant wall 54.

The upper wall 44 is configured including a bulge portion 64 that is formed from the front wall 68 of the rear-side member 14 to as far as above the fastening portion 58A and that bulges gently toward the upper side on progression toward the rear side, and an inclined wall 66 that is formed further to the rear side than above the fastening portion 58A and is inclined toward the upper side on progression toward the rear side. The front wall 68 of the rear-side member 14 connects together the upright wall 42, the bulge portion 64 configuring part of the upper wall 44, and the attachment seat 60 configuring part of the lower wall 46.

In the front section 48 of the rear-side member 14, an inclined rib 70 is provided from the upper end of the pendant wall 54 so as to pass through an intersection point S of the pendant wall 62 with the attachment seat 58, and the front end of the inclined rib 70 is connected to the front wall 68. The rocker 20 is provided on a forward extension line of the inclined rib 70, and an intersection point S' between the inclined rib 70 and the front wall 68, and the upper lateral wall 34 of the rocker 20, are provided at substantially same heights when viewed along the front-rear direction.

Furthermore, plural upright ribs 72 connecting the upper wall 44 and the inclined rib 70 together in the height direction are provided between the upper wall 44 and the lower wall 46 of the front section 48 of the rear-side member 14 so as to project out from the upright wall 42. Namely, the upright ribs 72 have plate thickness directions aligned with the front-rear direction, and extend in the height direction in vehicle side view.

Note that an upright rib 72A provided on the attachment seat 60 side extends past the inclined rib 70 as far as the attachment seat 60, and is formed so as to connect the upper wall 44 and the lower wall 46 together. Moreover, one of the previously mentioned bosses 15 is provided at the upright rib 72A. However, the boss 15 are not necessarily always provided to the upright rib 72A, and may be provided at another rib.

An upright rib 74 connecting the upper wall 44 and the fastening portion 58A together is provided projecting out from the upright wall 42 at a location where the fastening portion 58A is provided. The upright rib 74 has a plate thickness direction substantially aligned with the front-rear direction, extends substantially in the height direction in vehicle side view, and is inclined slightly toward the rear side on progression toward the lower side.

Furthermore, a rear end of the inclined rib 70 is connected to an upper end (intersection point T) of the pendant wall 54, and an upright rib 76 connecting the intersection point T between the inclined rib 70 and the pendant wall 54, to the upper wall 44, is provided projecting out from the upright wall 42. The upright rib 76 has a plate thickness direction substantially aligned with the front-rear direction, extends substantially in the height direction in vehicle side view, and is inclined slightly toward the rear side on progression toward the vehicle lower side.

The rigidity of the rear-side member 14 can be increased by providing the upright ribs 72, 74, 76 in this manner, compared to cases in which these upright ribs 72, 74, 76 are not provided.

### Rear-Side Member Central Section

A front portion 50A side of the central section 50 of the rear-side member 14 is connected to the front section 48 and formed with a convex profile so as to form a convex profile toward the upper side on progression toward the rear side. A rear portion 50B side of the central section 50 is formed in a substantially horizontal shape along the front-rear direction and is connected to the rear section 52 of the rear-side member 14. Note that the front portion 50A and the rear portion 50B are continuously connected at the central section 50 of the rear-side member 14 through a gently curving surface.

At the front portion 50A side of the central section 50, on the upper wall 44 an inclined wall 78 is formed connected to the inclined wall 66 provided on the front section 48 side of the rear-side member 14, with the inclined wall 78 being inclined toward the upper side on progression toward the rear side.

A curved section 80 is provided at the lower wall 46 at the front portion 50A side of the central section 50. The curved section 80 is connected to the upper end (intersection point T) of the pendant wall 54 provided at the front section 48 side and is formed with a gentle curve toward the upper side on progression toward the rear side.

Plural upright ribs 82 connecting in the height direction between the inclined wall 78 of the upper wall 44 and the curved section 80 of the lower wall 46 are provided projecting out from the upright wall 42 at the front portion 50A side of the central section 50, with the plural upright ribs 82 having a plate thickness direction substantially aligned with the front-rear direction and extending substantially along the height direction in vehicle side view.

The upright ribs 82 are referred to as upright ribs 82A, 82B, 82C, in sequence from the front end side of the central section 50, with the upright ribs 82A, 82B, 82C inclined toward the rear side on progression toward the lower side, and substantially parallel to the upright ribs 76 provided at the front section 48 of the rear-side member 14.

Moreover, a horizontal rib 84 is provided projecting out from the upright wall 42 between the upright rib 82A and the upright rib 82B, with the horizontal rib 84 having a plate thickness direction aligned with the height direction and extending in the front-rear direction in vehicle side view. The horizontal rib 84 extends from an intersection point U with the upper wall 44 toward the rear side, and connects the upright rib 82B and the lower wall 46 together.

The rear portion 50B side of the central section 50 is, as described above, formed in a substantially horizontal shape along the front-rear direction. This means that at the rear portion 50B side of the central section 50, a horizontal wall 83 is formed at the upper wall 44 extending in a substantially horizontal shape along the front-rear direction and the width direction, and a horizontal wall 85 (lower edge portion of the central section 50 of the rear-side member 14) is formed at the lower wall 46 extending in a substantially horizontal shape along the front-rear direction and the width direction.

Namely, in the central section 50 of the rear-side member 14, the upper wall 44 is configured including the inclined wall 78 and the horizontal wall 83, and the lower wall 46 is configured including the curved section 80 and the horizontal wall 85. Note that a step portion 86 stepping up toward the upper side in the height direction is formed at the horizontal wall 85 at the rear section 52 side of the rear-side member 14.

Moreover, plural upright ribs 88 connecting between the horizontal wall 83 and the horizontal wall 85 are provided projecting out from the upright wall 42 at the rear portion 50B side of the central section 50, with the plural upright ribs 88 having their plate thickness direction aligned with the front-rear direction and extending along the height direction in vehicle side view.

Namely, these upright ribs 88 differ from the upright ribs 82 provided at the front portion 50A side of the central section 50 in that they are provided in a state substantially orthogonal to the horizontal wall 83 (upper edge portion of the rear-side member 14) that is formed in a substantially horizontal shape, and to the horizontal wall 85 (lower edge portion of the central section 50 of the rear-side member 14). In the present exemplary embodiment bosses 15 are provided at the upright ribs 88. Note that the bosses 15 are not necessarily provided at the upright ribs 88, and may be provided at other ribs.

### Rear-Side Member Rear Section

As described above, the inclined portion 56 formed inclined toward the lower side on progression toward the rear side is provided at the rear section 52 of the rear-side member 14, and a connection section 90 to which the crash box 22 is connected is provided at the rear side of the inclined portion 56.

In the inclined portion 56, an inclined wall 92 is formed on the upper wall 44 of the rear-side member 14 so as to be connected to the horizontal wall 83 provided at the central section 50 side of the rear-side member 14, with the inclined wall 92 inclined toward the lower side on progression toward the rear side.

Moreover, in the inclined portion 56, an inclined wall 94 is formed on the lower wall 46 of the rear-side member 14 so as to be connected to the horizontal wall 85 provided at the central section 50 side of the rear-side member 14, with the inclined wall 94 inclined toward the lower side on progression toward the rear side.

Moreover, at the connection section 90 side of the inclined portion 56, a horizontal wall 96 connected to the inclined wall 92 is formed at the upper wall 44, and a horizontal wall 98 connected to the inclined wall 94 is formed at the lower wall 46.

Namely, in the rear section 52 of the rear-side member 14, the upper wall 44 is configured including the inclined wall 92 and the horizontal wall 96, and the lower wall 46 is configured including the inclined wall 94 and the horizontal wall 98. Note that an attachment seat for attaching a rear portion of a non-illustrated rear suspension member is provided at the horizontal wall 98. The horizontal walls 96, 98 respectively extend in a substantially horizontal shape along the front-rear direction and the width direction.

An abutting wall 100 that the front end of the crash box 22 is able to abut against is provided at the connection section 90. The abutting wall 100 has a plate thickness direction aligned with the front-rear direction and extends in the height direction in vehicle side view. A coupling wall 102 extends from an upper end of the abutting wall 100 toward the rear side.

Note that the coupling wall 102 is formed further to the upper side than the horizontal wall 96 by an amount of the plate thickness of an upper wall 118 of a crash box 22, described later. Moreover, a pair of side walls 104 (second side walls) respectively depend toward the lower side from the vehicle width direction left and right of the coupling wall 102 so as to cover the crash box 22 from the vehicle width direction left and right.

At the inclined portion 56, a horizontal rib 106 (first wall) is provided so as to project out from the upright wall 42 between the lower wall 46 and the upper wall 44 of the rear-side member 14. The horizontal rib 106 has a plate thickness direction aligned with the height direction, extends in the front-rear direction in vehicle side view, and is formed with a substantially horizontal shape.

The horizontal rib 106 is connected to the horizontal wall 96 configuring part of the upper wall 44 of the rear-side member 14, and the horizontal rib 106 and the horizontal wall 96 are provided at heights that overlap when viewed along the front-rear direction, and are continuously formed along the front-rear direction. Moreover, the horizontal rib 106 is provided substantially at a height that overlaps with the horizontal rib 84 and the horizontal wall 85 provided at the central section 50 of the rear-side member 14 when viewed along the front-rear direction. Namely, the horizontal rib 84, the horizontal wall 85, the horizontal rib 106, and the horizontal wall 96 are formed continuously along the front-rear direction.

In the inclined portion 56, at a lower side of the horizontal rib 106 a horizontal rib 108 (first wall) is provided projecting out from the upright wall 42 between the inclined wall 94 and the abutting wall 100. The horizontal rib 108 has a plate thickness direction aligned with the height direction, extends in the front-rear direction in vehicle side view, and is formed with a substantially horizontal shape.

Furthermore, in the inclined portion 56 an upright rib 110 is provided projecting out from the upright wall 42 between the upper wall 44 and the lower wall 46. The upright rib 110 has a plate thickness direction aligned with the front-rear direction and extends in the height direction in vehicle side view. Upright ribs 112, 114 are also provided projecting out from the upright wall 42 between the horizontal rib 106 and the horizontal rib 108. The upright ribs 112, 114 have plate thickness directions aligned with the front-rear direction and respectively extend in the height direction in vehicle side view. Note that the upright rib 114 is formed at an intersection point V of the horizontal wall 96 with the inclined wall 92.

Furthermore, an upright rib 116 is provided projecting out from the upright wall 42 between the horizontal rib 108 and the horizontal wall 98. The upright rib 116 has a plate thickness direction aligned with the front-rear direction and extends in the height direction in vehicle side view. Note that the upright rib 116 is formed at an intersection point W of the horizontal wall 98 with the inclined wall 94.

Moreover, although in the present exemplary embodiment bosses 15 are provided at the horizontal rib 108, bosses 15 are not necessarily provided to the horizontal rib 108 and may be provided to other ribs.

### Crash Box

The crash box 22 illustrated in Fig. 2 is, for example similarly to the rocker 20, configured with a closed cross-section profile formed in an angular tube shape in cross-section profile sectioned along the height direction and the width direction, and extends in the front-rear direction as described above.

The crash box 22 is configured including mutually opposing walls of an upper wall 118 and a lower wall 120, and a pair of side walls 122 (first side walls) respectively provided at the width direction left and right. A lateral wall 126 (second wall) is provided between the upper wall 118 and the lower wall 120 so as to partition the inside of a hollow section 124 formed by the upper wall 118, the lower wall 120, and the pair of side walls 122 in the height direction. The lateral wall 126 has a plate thickness direction aligned with the height direction and extends in the front-rear direction in vehicle side view.

In a state in which a front end of the crash box 22 is abutted against the abutting wall 100 provided at the connection section 90 of the rear-side member 14, the upper wall 118 and the pair of side walls 122 are connected to the coupling wall 102 and the pair of side walls 104 configuring the connection section 90, for example by bolts, welding, or the like.

When doing so the upper wall 118 of the crash box 22 is provided at a height overlapping with the horizontal wall 96 of the rear-side member 14 when viewed along the front-rear direction, and the lateral wall 126 of the crash box 22 is provided at a height overlapping with the horizontal rib 108 of the rear-side member 14 when viewed along the front-rear direction. The lower wall 120 of the crash box 22 is provided at a height overlapping with the horizontal wall 98 of the rear-side member 14 when viewed along the vehicle front-rear direction. Note that reference in the present exemplary embodiment to "overlapping ... when viewed along the front-rear direction" does not necessarily mean that both members completely overlap when viewed along the front-rear direction, and also includes embodiments in which at least part is overlapping.

### Bumper Reinforcement

The bumper reinforcement 24 illustrated in Fig. 2 has, for example, a closed cross-section profile formed in an angular tube shape in cross-section profile sectioned along the height direction and the front-rear direction, and extends in the width direction as described above. The bumper reinforcement 24 is configured including mutually opposing walls of an upper wall 128 and a lower wall 130, and a front wall 132 and a rear wall 134 respectively provided at the vehicle front and rear.

Lateral walls 138, 140 are provided between the upper wall 128 and the lower wall 130 so as to partition the inside of a hollow section 136 formed by the upper wall 128, the lower wall 130, the front wall 132, and the rear wall 134 in the height direction. The lateral walls 138, 140 have plate thickness directions aligned with the height direction, and extend in the front-rear direction in vehicle side view.

The front wall 132 of the bumper reinforcement 24 is connected to the crash box 22 by, for example, welding, bolt fasteners, or the like. Note that an attachment bracket or the like may be interposed between the front wall 132 of the bumper reinforcement 24 and the crash box 22.

### Vehicle Structure Operation and Advantageous Effects

Next, description follows regarding the operation and advantageous effects of the vehicle structure according to the present exemplary embodiment.

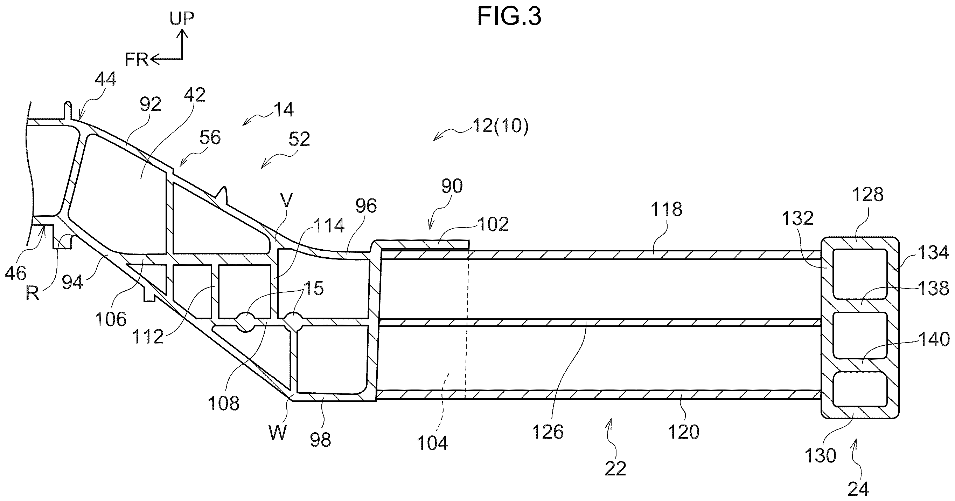

In the present exemplary embodiment, as illustrated in Fig. 2 and Fig. 3, the vehicle structure includes the rear-side member 14 and the crash box 22. The rear-side member 14 extends in the front-rear direction in the vehicle side section 18. The crash box 22 is disposed further to the rear side than the rear-side member 14, and is integrally provided to the rear-side member 14 using the connection section 90 provided at a rear end 14A of the rear-side member 14 extending in the vehicle front-rear direction.

The horizontal ribs 106, 108 serving as first walls are provided at the rear-side member 14. The horizontal ribs 106, 108 are provided inside the cross-section of the rear-side member 14 at least at the rear section 52 positioned at the crash box 22 side of the rear-side member 14, and the horizontal ribs 106, 108 have plate thickness directions aligned with the height direction, and extend in the front-rear direction in vehicle side view.

The lateral wall 126 serving as a second wall is provided at the crash box 22. The lateral wall 126 is provided inside the cross-section of the crash box 22 at a height overlapping with the horizontal rib 108 provided at the rear-side member 14 when viewed along the front-rear direction, with the lateral wall 126 having a plate thickness direction aligned with the height direction and extending in the front-rear direction in vehicle side view.

Thus in the present exemplary embodiment, the horizontal rib 108 that extends in the front-rear direction in the rear-side member 14, and the lateral wall 126 that extends in the front-rear direction in the crash box 22, are provided at heights overlapping when viewed along the front-rear direction.

This means that when a crash load has been input to the vehicle 10 along the front-rear direction, the crash load is transmitted between the crash box 22 and the rear-side member 14 through the lateral wall 126 provided at the crash box 22 and the horizontal rib 108 provided at the rear-side member 14.

The crash load that has been input from the bumper reinforcement 24 along the front-rear direction is accordingly transmitted to the crash box 22, and is effectively transmitted from the crash box 22 to the rear-side member 14. This enables the EA effect of the crash box 22 to be raised.

Moreover, in the present exemplary embodiment the lateral wall 126 and the horizontal rib 108 that effectively transmit the crash load between the crash box 22 and the rear-side member 14 are respectively provided inside the cross-section of the crash box 22 and inside the cross-section of the rear-side member 14.

The present exemplary embodiment thereby secures a load transmission path for transmitting the crash load inside the cross-sections of the crash box 22 and the rear-side member 14. The present exemplary embodiment accordingly enables the degrees of freedom for design to be raised for the exterior profiles of the crash box 22 and the rear-side member 14.

Furthermore, the upper wall 118 of the crash box 22 is provided at a height overlapping with the horizontal rib 106 of the rear-side member 14 when viewed along the front-rear direction, and the lateral wall 126 of the crash box 22 is provided at a height overlapping with the horizontal rib 108 of the rear-side member 14 when viewed along the front-rear direction. The lower wall 120 of the crash box 22 is also provided at a height overlapping with the horizontal wall 98 of the rear-side member 14 when viewed along the front-rear direction.

Due to adopting such a configuration, the present exemplary embodiment is able to increase the load transmission paths between the crash box 22 and the rear-side member 14, enabling load distribution to be achieved.

Moreover, the horizontal ribs 106, 108 are integrally molded to the rear-side member 14, and the lateral wall 126 is integrally molded to the crash box 22. The lateral walls 138, 140 are also integrally molded to the bumper reinforcement 24.

This means that, for example, the rigidity of the horizontal rib 108, the lateral wall 126, and the lateral walls 138, 140 can be raised compared with cases in which, although not illustrated, the horizontal rib 108, the lateral wall 126, and the lateral walls 138, 140 are respectively formed as separate members to the rear-side member 14, the crash box 22, and the bumper reinforcement 24.

The present exemplary embodiment enables load transmission efficiency to the bumper reinforcement 24, the crash box 22, and the rear-side member 14 to be further raised. Moreover, due to the lateral walls 138, 140, the lateral wall 126, and the horizontal rib 108 being respectively integrally molded to the rear-side member 14, the crash box 22, and the bumper reinforcement 24, the number of components can be reduced compared to a comparative example, and the times for processes such as for coupling members together are reduced.

Furthermore, the rear-side member 14 is curved so as to form a convex profile toward the upper side in vehicle side view. The present exemplary embodiment enables effective load transmission from the crash box 22 to the rear-side member 14 by the horizontal rib 108 provided at the rear-side member and the lateral wall 126 provided at the crash box even for a rear-side member curved in the height direction in this manner.

Moreover, the rear-side member 14 is formed with an open cross-section profile in the present exemplary embodiment. There accordingly might have been a concern that the rear-side member 14 might lower the load transmission efficiency to the crash box 22 compared with a framework member formed with a closed cross-section profile. However, due to the present exemplary embodiment being able, at the horizontal rib 108 provided inside the cross-section of the rear-side member 14, to raise the load transmission efficiency with the lateral wall 126 provided to the crash box 22 formed with a closed cross-section profile, the load transmission efficiency to the crash box 22 can be effectively raised irrespective of the rear-side member 14 having an open cross-section profile.

Furthermore, the horizontal rib 106 provided at the rear section 52 of the rear-side member 14 extends in the front-rear direction so as to connect together the rear section 52 of the rear-side member 14 formed curved toward the upper side in vehicle side view, and the horizontal wall 85 configuring the lower end of the central section 50 of the rear-side member 14.

This means that in the present exemplary embodiment, the crash load transmitted from the crash box 22 through the horizontal rib 106 is able to be effectively transmitted along the profile of the rear-side member 14.

Although the inclined rib 70 is provided at the front section 48 of the rear-side member 14 from the upper end of the pendant wall 54 through the intersection point S of the pendant wall 62 with the attachment seat 58, and the inclined rib 70 connects to the curved section 80 of the central section 50 of the rear-side member 14 via the intersection point T, the intersection point S' of the front wall 68 with the inclined rib 70 and the upper lateral wall 34 of the rocker 20 are provided at heights that substantially overlap when viewed along the front-rear direction.

This means that the crash load transmitted through the horizontal wall 85 of the rear-side member 14 can be transmitted to the upper lateral wall 34 side of the rocker 20 through the curved section 80 and the inclined rib 70.

In the present exemplary embodiment the crash box 22 also forms an angular tube shape, and is configured further including the pair of side walls 122 disposed opposing each other and connecting the upper wall 118 and the lower wall 120 together. The connection section 90 to which the crash box 22 is connected is provided at the rear-side member 14. The connection section 90 is configured including the coupling wall 102 and the pair of side walls 104, with the coupling wall 102 being coupled to the upper wall 118 of the crash box 22 and the pair of side walls 104 being respectively coupled to the pair of side walls 122 of the crash box 22.

In this manner, the connection section 90 coupled so as to cover the upper wall 118 and the pair of side walls 122 of the crash box 22 is provided at the rear-side member 14. This means that when crash load is input in the vehicle 10 along the front-rear direction in the present exemplary embodiment, displacement at the crash box 22 toward the vehicle upper side and toward the vehicle width direction with respect to the rear-side member 14 can be reduced by the connection section 90. The present exemplary embodiment is accordingly able to more reliably transmit crash load from the crash box 22 to the rear-side member 14.

Moreover, due to there being no lower wall provided in the connection section 90, connection can be performed along the height direction when connecting the crash box 22 to the connection section 90, enabling a narrower assembly space than cases in which connection is performed along the front-rear direction.

### Modified Examples of Present Exemplary Embodiment

Although the above exemplary embodiment has been described for an example in which, as illustrated in Fig. 3, the lateral walls 138, 140 are provided above and below each other between the upper wall 128 and the lower wall 130 in the bumper reinforcement 24, the configuration of the bumper reinforcement 24 is not limited thereto.

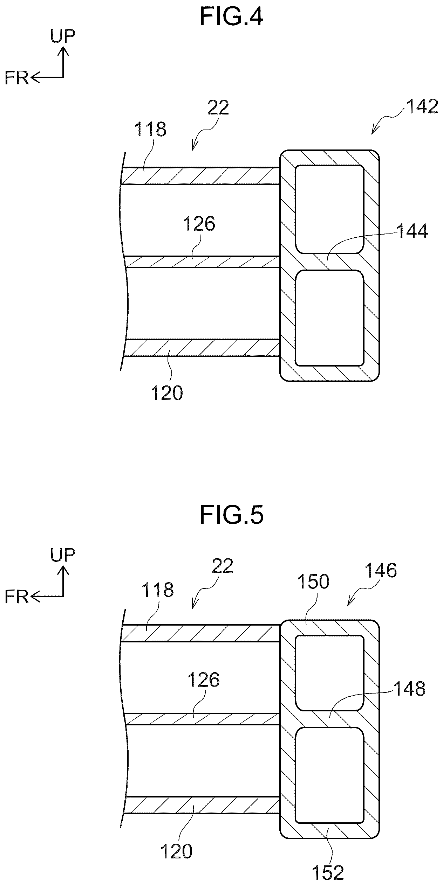

For example, as a Modified Example 1 illustrated in Fig. 4, a lateral wall 144 (third wall) having a plate thickness direction aligned with the height direction and extending in the front-rear direction in vehicle side view may be provided inside the cross-section of a bumper reinforcement 142 at a height overlapping with the lateral wall 126 provided at the crash box 22 when viewed along the front-rear direction.

Adopting this approach means that the Modified Example 1 more effectively transmits crash load along the front-rear direction from the lateral wall 144 of the bumper reinforcement 142 to the lateral wall 126 of the crash box 22. Namely, the load transmission efficiency from the bumper reinforcement 142 to the crash box 22 is raised, enabling further raising in the EA effect of the crash box 22.

Moreover, as a Modified Example 2, as illustrated in Fig. 5, a lateral wall 148 (third wall) of a bumper reinforcement 146 may be provided at a height overlapping with the lateral wall 126 of the crash box 22 when viewed along the front-rear direction, and also an upper wall 150 of the bumper reinforcement 146 may be provided at a height overlapping with the upper wall 118 of the crash box 22 when viewed along the front-rear direction.

Adopting this approach means that the Modified Example 2 effectively transmits the crash load along the front-rear direction, respectively from the upper wall 150 and the lateral wall 148 of the bumper reinforcement 146 to the upper wall 118 and the lateral wall 126 of the crash box 22. Namely, the Modified Example 2 enables the load transmission efficiency from the bumper reinforcement 146 to the crash box 22 to be further raised. Moreover, the number of load transmission paths between bumper reinforcement 146 and the crash box 22 is increased, enabling load distribution to be achieved.

Note that although not illustrated, together with providing the lateral wall 148 of the bumper reinforcement 146 at a height overlapping with the lateral wall 126 of the crash box 22 when viewed along the front-rear direction as illustrated in Fig. 5, a lower wall 152 of the bumper reinforcement 146 may be provided at a height overlapping with the lower wall 120 of the crash box 22 when viewed along the front-rear direction.

Furthermore, the upper wall 150, the lateral wall 148, and the lower wall 152 of the bumper reinforcement 146 may be provided at heights respectively overlapping with the upper wall 118, the lateral wall 126, and the lower wall 120 of the crash box 22 when viewed along the front-rear direction.

### Supplementary Explanation of Present Exemplary Embodiment

In the present exemplary embodiment, the rear-side member 14 illustrated in Fig. 2 is formed by aluminum die casting, however there is no limitation to aluminum, and the rear-side member 14 may be formed by a die cast product made from an alloy with zinc/magnesium/copper or the like, and may be formed as a casting from iron or the like. Furthermore, the rear-side member 14 may be molded from a fiber reinforced plastic (FRP).

Although in the present exemplary embodiment the rear-side member 14 is configured with a curved profile convex toward a vehicle upper side in vehicle side view, there is no need to be limited thereto, and the rear-side member 14 may be formed with a straight-line shape.

Moreover, although in the present exemplary embodiment an example has been described of the rear-side member 14 serving as a vehicle structure, the vehicle structure of the present disclosure is not limited to being a rear-side member 14. For example, although not illustrated, application may be made to a front side member provided to a vehicle front section.

Moreover, although in the present exemplary embodiment an example has been described in which the rear-side member 14, the crash box 22, and the bumper reinforcement 24 are formed as respective separate members, there is no limitation thereto. For example, although not illustrated, the rear-side member 14 and the crash box 22 may be molded as a single body, or the crash box 22 and the bumper reinforcement 24 may be molded as a single body. Moreover, the rear-side member 14, the crash box 22, and the bumper reinforcement 24 may be molded as a single body.

However, although in the present exemplary embodiment the crash box 22 and the bumper reinforcement 24 are configured with closed cross-section profiles, in cases in which the crash box 22 or the bumper reinforcement 24 are molded as a single body with the rear-side member 14, such a crash box 22 or bumper reinforcement 24 is configured with an open cross-section profile to match the profile of the rear-side member 14.

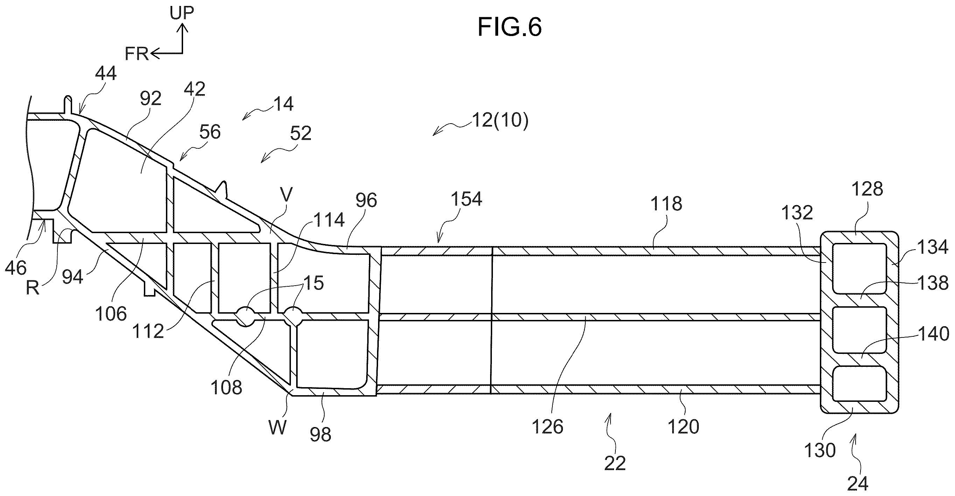

Moreover, although in the present exemplary embodiment an example has been described of the rear-side member 14 serving as a framework member, and an example described in which the rocker 20 and the crash box 22 are respectively connected to the rear-side member 14, there is no limitation thereto. For example, a connection member may be separately provided between the rear-side member 14 and the rocker 20 for connecting these two members together. Moreover, the rear-side member 14 may be configured including a so-called rear-side member rear at a rear section thereof in the front-rear direction. For example, a rear-side member rear is a framework section that is integrally formed to the rear-side member 14 and that extends in a straight line shape along the front-rear direction from a rear end portion of the rear-side member 14 curved with a convex profile toward the vehicle upper side, and as an example, a cross-section profile thereof is configured with an open cross-section profile opening to the vehicle width direction outer side when sectioned along the height direction and the width direction. Moreover, as another example, as illustrated in Fig. 6, a rear-side member rear 154 formed as a separate member may be interposed between the rear-side member 14 and the crash box 22. Note that in cases in which the rear-side member 14 and the rear-side member rear 154 are formed as separate members, the rear-side member rear 154 may be configured with a closed cross-section profile in cross-section sectioned along the height direction and the width direction.

Note that although in the exemplary embodiment an example has been described in which the lateral wall 126 formed with a plate thickness direction aligned with the height direction is provided inside the cross-section of the crash box 22, for example as a reference example, although not illustrated, an upright wall formed with a plate thickness direction aligned with the width direction may be provided. Moreover, similarly to the crash box 22, an upright wall formed with a plate thickness direction aligned with the front-rear direction may, for example, also be provided in the bumper reinforcement 24.

Although an example of exemplary embodiments of the present disclosure has been described above, the exemplary embodiments of the present disclosure are not limited to the above description, and appropriate combinations may be employed of an exemplary embodiment and the various modified examples, and obviously various embodiments may be implemented within a range not departing from the scope of the present disclosure.

## Claims

1. A vehicle structure comprising:
a framework member (14) extending in a vehicle front-rear direction at a side section, in a vehicle width direction, of a vehicle (10);
a crash box (22) disposed further to an outer side, in the vehicle front-rear direction, than the framework member (14), and extending in the vehicle front-rear direction, the crash box (22) being a single body with the framework member (14) or being provided integrated to the framework member (14);
a first wall (106, 108) provided inside a cross-section of the framework member (14) at least at an end portion positioned, in the vehicle front-rear direction, on a crash box side of the framework member (14), the first wall (106, 108) having a plate thickness direction aligned with a vehicle height direction and extending in the vehicle front-rear direction when viewed along the vehicle width direction; and
a second wall (126) provided inside a cross-section of the crash box (22) at a height overlapping with the first wall (106, 108) when viewed along the vehicle front-rear direction, the second wall (126) having a plate thickness direction aligned with the vehicle height direction and extending in the vehicle front-rear direction when viewed along the vehicle width direction.

2. The vehicle structure of claim 1, wherein:
the crash box (22) includes an upper wall (118) that configures an upper end portion in the vehicle height direction, and a lower wall (120) that configures a lower end portion that opposes the upper wall (118) in the vehicle height direction; and
a plurality of first walls (106, 108) are provided, at least part of the plurality of first walls (106, 108) being provided at a height overlapping with at least one of the upper wall (118) or the lower wall (120) of the crash box (22), when viewed along the vehicle front-rear direction.

3. The vehicle structure of claim 1 or claim 2, further comprising:
a bumper reinforcement (24) extending along the vehicle width direction further to an outer side, in the vehicle front-rear direction, than the crash box (22); and
a third wall (148) provided inside a cross-section of the bumper reinforcement (24) at a height overlapping with the second wall (126) when viewed along the vehicle front-rear direction, the third wall (148) having a plate thickness direction aligned with the vehicle height direction and extending in the vehicle front-rear direction when viewed along the vehicle width direction.

4. The vehicle structure of claim 3, wherein the first wall (106, 108) is integrally molded to the framework member (14), the second wall (126) is integrally molded to the crash box (22), and the third wall (148) is integrally molded to the bumper reinforcement (24).

5. The vehicle structure of claim 1 or claim 2, wherein the framework member (14) is disposed at a vehicle rear section, and is configured as a rear side member (14) that is curved so as to be convex toward a vehicle upper side when viewed along the vehicle width direction.

6. The vehicle structure of claim 1 or claim 2, wherein the framework member (14) is formed with an open cross-section profile, and the crash box (22) is formed with a closed cross-section profile.

7. The vehicle structure of claim 5, wherein the first wall (106, 108) extends in the vehicle front-rear direction so as to connect together a rear section (52), in the vehicle front-rear direction, of the framework member (14) and a lower edge portion (85) of a central section (50), in the vehicle front-rear direction, of the framework member (14).

8. The vehicle structure of claim 2, wherein:
the crash box (22) further includes a pair of first side walls (122) that are disposed opposing each other and that connect the upper wall (118) and the lower wall (120) together to form an angular tube shape,
a connection section (90) is provided at the framework member (14) for connecting to the crash box (22); and
the connection section (90) comprises:
a coupling wall (102) coupled to the upper wall (118) of the crash box (22), and
a pair of second side walls (104) that are disposed respectively depending from the coupling wall (102) toward the vehicle lower side and that oppose each other, with the pair of second side walls (104) respectively coupled to the pair of first side walls (122) of the crash box (22).
